# EUROPÄISCHE PATENTSCHRIFT

(11) **EP 2 142 361 B1**
(45) Veröffentlichungstag und Bekanntmachung des Hinweises auf die Patenterteilung: **06.08.2014**
(21) Anmeldenummer: 08701139.1
(22) Anmeldetag: 17.01.2008
(51) Int. Cl.: B30B 1/26

(54) **KURVENGETRIEBE MIT ABNAHMEROLLEN**
CAM MECHANISM HAVING TRANSFER ROLLERS
COMMANDE A CAMES A ROULEAUX DE TRANSFERT

(30) Priorität: 30.03.2007 DE 102007015467
(43) Veröffentlichungstag der Anmeldung: 13.01.2010
(73) Patentinhaber: Settele, Wilhelm, 87629 Füssen (DE)
(72) Erfinder: Settele, Wilhelm, 87629 Füssen (DE)
(74) Vertreter: Kuhnen & Wacker
(86) Internationale Anmeldenummer: PCT/EP2008/000350
(87) Internationale Veröffentlichungsnummer: WO 2008/119402

(56) Entgegenhaltungen:
- CS-B1- 271 285
- DE-A1- 19 622 405
- GB-A- 1 349 457
- US-A- 493 996
- US-A- 5 544 576
- US-A- 5 605 096
- US-A1- 2006 101 892

## Beschreibung

Die vorliegende Erfindung betrifft ein Kurvengetriebe mit einem Kurvenglied und einem Eingriffsglied, zur Verwendung in Stanz-Biege-Maschinen. Die Erfindung betrifft ferner ein Verfahren zur Herstellung eines derartigen Kurvengetriebes, ein Programm zur Durchführung der Schritte des Verfahrens sowie eine Stanz-Biege-Maschine mit einem solchen Kurvengetriebe.

Kurvengetriebe sind in der Praxis, insbesondere im Bereich von Maschinen oder Anlagen zum Stanzen, Biegen und/oder Montieren, bekannt. So versteht der Fachmann unter herkömmlichen Kurvengetrieben üblicherweise dreigliedrige Kurvengetriebe, die ein Kurvenglied (beispielsweise eine Kurvenscheibe), ein Eingriffsglied (beispielsweise einen Stößel, einen Schieber, eine Schwinge oder einen Linearschlitten) sowie einen Steg (beispielsweise ein Gehäuse) aufweisen.

Die Kurvenscheibe und der Linearschlitten berühren dabei einander im Kurvengelenk, dem sogenannten Berührungspunkt. Dieser Berührungspunkt ist bei einem Kurvengetriebe aus Kurvenscheibe und Linearschlitten zur Übertragung von großen Drehmomenten bzw. Kräften durch die gegebene Strichauflage zwischen der Kurvenscheibe und einer im Linearschlitten drehbar gelagerten Abnahmerolle definiert, wobei im Betrieb mit der Rotation der Kurvenscheibe des Kurvengetriebes, insbesondere der Kurvenscheibe und der diese berührenden Abnahmerolle die sich jeweils berührenden Punkte bzw. Linien der Umfangsoberfläche variieren.

Üblicherweise wird nämlich in der Praxis im Kurvengelenk bzw. in diesem Berührungspunkt zwischen Kurvenglied und Eingriffsglied ein zusätzliches Abtastglied vorgesehen, welches beispielsweise eine drehbar im Linearschlitten gelagerte Rolle ist, welche einerseits die Laufeigenschaften verbessert, und andererseits die Lebensdauer erheblich verlängert, ohne dabei die Kinematik nachteilig zu verändern.

Die Kurvenscheibe wiederum ist am Steg bzw. Gehäuse befestigt, welches des weiteren den Linearschlitten führt.

Hierzu offenbart beispielsweise die DE 299 23 758 U1 eine Maschine zum Stanzen, Biegen und/oder Montieren von Blechteilen mit einem oberen Gehäuseteil und einem unteren Gehäuseteil. An jedem Gehäuseteil ist ein Schlittenaggregat geführt, das von einem programmgesteuerten Synchronmotor angetrieben wird. Zwischen Motor und Schlitten ist ein Getriebe geschaltet, das als Kurvenscheibe, Pleuel oder Kniehebel ausgebildet ist. Durch die Drehbewegung der Kurvenscheibe wird der Schlitten in eine Linearbewegung versetzt, wobei die Kurvenscheibe selbst an einer im Linearschlitten angebrachten Abnahmerolle abwälzt.

Ein ähnliches System ist ferner aus der DE 43 36 853 A1 bekannt, die einen Antrieb, insbesondere für eine Transferpresse offenbart, die zum dreiachsigen Transport von Werkstücken durch die Bearbeitungsstationen mittels Greiferschienen ausgebildet ist.

Zudem lehrt die DE 199 532 83 A1 eine verstellbare Schlitteneinheit für Stanz-, Biege- und Montageautomaten, mit einem linear geführten Schlitten, dessen Bewegung mindestens einer auf einer Antriebsachse angeordneten Kurvenscheibe abgeleitet ist, und mit einem am Schlitten befestigten Werkzeugträger für Biege- und Montageautomaten, mit einer Hublagenverstellung zum Anbau an ein Maschinengestell. Der Schlitten weist hierbei eine Abnahmerolle auf, an welcher die Kurvenscheibe zur Übertragung der Kraft abwälzt.

Ferner offenbart die DE 103 327 018 B3 derselben Anmelderin eine Stanz-Biege-Maschine sowie ein damit modular aufgebautes, kurvengesteuertes Stufenstanzbiegebearbeitungszentrum mit einem Kurvengetriebe zur Übertragung der Kraft einer Antriebswelle auf einen Linearschlitten.

Die aus der Praxis bekannten Systeme nutzen einerseits die vermittels der Kurvenscheibe von einer Antriebswelle übertragbare Kraft, um den Linearschlitten beispielsweise für eine Stanz- oder Biegebewegung nach unten zu führen, und nutzen gleichzeitig einen zweiten Hebel mit zugehöriger Abnahmerolle oder gar ein weiteres Kurvengetriebe, um den Linearschlitten mit entsprechenden Rückholkräften wieder in seine "Ausgangsposition" zurückzuführen. Man spricht hierbei von sogenannten "zwangsgeführten" Systemen.

Durch die Verwendung zweier Kurvenscheiben, die mit entsprechend zueinander versetzten "Nocken" ausgebildet sind, kann die im produzierenden Gewerbe gewünschte hohe Taktzahl zur kosteneffektiven Fertigung erreicht werden.

Die aus der Praxis bekannten Kurvengetriebe mit einer Kurvenscheibe, die auf einer im Linearschlitten gelagerten Abnahmerolle abwälzt, schaffen dadurch die Möglichkeit einer hohen Fertigungsgeschwindigkeit.

Jedoch ist die zwischen der Kurvenscheibe und der Abnahmerolle gegebene Strichauflage bei diesen, aus der Praxis bekannten, Kurvengetrieben nachteilig.

Ferner ist es nachteilig, daß die Abnahmerolle sowie auch die Linearschlittenführung ständig einer hohen Belastung durch die häufig unvermeidbaren Querkräfte, die von der Kurvenscheibe auf die Abnahmerolle übertragen werden, ausgesetzt sind.

Insbesondere werden vermittels der Kurvenscheibe, welche auf der Abnahmerolle abwälzt, Drehmomente bzw. Kräfte im Bereich von etwa 10 kN bis maximal 100 kN übertragen, welche der Linearschlitten dann wiederum zur Durchführung des Stanzens bzw. Biegens letztlich auf den Pressenbären und/oder das Ziehkissen überträgt.

Die dabei im Berührungspunkt zwischen der Nocke der Kurvenwelle und der Abnahmerolle entstehenden Querkräfte verursachen eine signifikant verringerte Lebensdauer der Abnahmerolle, der Schlittenführung und auch des Linearschlittens selbst. Dadurch ist es mittels der bekannten Kurvengetriebe nicht möglich, größere Kräfte im Bereich von mehreren 100 kN bis hin zu über 1000 kN zu übertragen.

Um die auf die Abnahmerolle wirkende Querkraft zu verringern und damit die Lebensdauer zu erhöhen, wurden Versuche unternommen, anstelle einer direkten Übertragung der Kraft von der Kurvenscheibe über die Abnahmerolle auf den Linearschlitten eine indirekte Kraftübertragung zu realisieren.

Hierzu wurde beispielsweise ein System vorgeschlagen, bei dem der Linearschlitten statt der herkömmlichen Abnahmerolle einen Gleitschuh aufweist. Der Gleitschuh gleitet seinerseits längs eines weiteren Pendelhebels, der an einem Ende die Abnahmerolle trägt. Die Abnahmerolle wiederum ist dann vom Pendelhebel geführt, wobei die Kurvenscheibe auf der Abnahmerolle abwälzt, den Pendelhebel auf und ab bewegt, dieser wiederum eine schräg orientierte Lineare Bewegung des Gleitschuhs erzwingt, welcher letztlich die gewünschte Auf- und Abbewegung des Linearschlittens verursacht.

Ein weiteres System zur indirekten Kraftübertragung sieht ferner ein Kurvengetriebe vor, bei dem die Kurvenscheibe und die am Linearschlitten angebrachte Abnahmerolle vertikal versetzt zueinander angeordnet sind. Ferner ist zwischen der Kurvenscheibe und der Abnahmerolle ein im Ruhezustand im wesentlichen horizontal angeordneter, schwenkbar gelagerter Hebel angeordnet, der seinerseits eine Abnahmerolle aufweist.

Die Kurvenscheibe wälzt auf dem Hebel ab, der dann durch Übertragung der auf ihn wirkenden Kraft auf die Abnahmerolle die Auf- und Ab- Bewegung des Schlittens verursacht.

Mittels dieser "Hebelsysteme" ist es zwar möglich, etwaige Querkräfte weitestgehend zu verringern, jedoch zeigen auch derartige Systeme eine unbefriedigend kurze Lebensdauer.

Insbesondere kommt es bei derartigen Hebelsystemen zu einer Belastung des Hebels sowie auch des Schlittens und der Führung durch Momente, die durch die auf den Hebel wirkende, mittels der Kurvenscheibe übertragene Kraft erzeugt werden.

Darüber hinaus treten zusätzlich Scherkräfte auf, wodurch die Abnutzung und Fehleranfälligkeit durch Ermüdung des Materials gesteigert wird.

Auch sind derartige "Hebelsysteme" nicht geeignet, die in der Praxis gewünschte, hohe Fertigungsgeschwindigkeit zu gewährleisten. Derlei Hebelsysteme sind zudem aufgrund ihres komplexeren Aufbaus störungsanfälliger. Ferner ist es vermittels derartiger Hebelsysteme nicht möglich, die maximal von der Kurvenscheibe auf den Linearschlitten übertragbare Kraft zu erhöhen.

Aus der GB 1 349 457 A, die als nächstliegender Stand der Techniek angesehen wird, ist noch ein Kurvengetriebe mit einem Kurvenglied und einem Eingriffsglied bekannt. Hierbei ist das Kurvenglied als Kurvenring ausgebildet und das Eingriffglied weist dabei zwei drehbar gelagerte Abnahmerollen auf, welche zur Übertragung einer in den Kurvenring eingeleiteten Antriebskraft auf das Eingriffsglied dienen.

Dementsprechend ist es Aufgabe der vorliegenden Erfindung, unter Vermeidung der aus dem Stand der Technik bekannten Nachteile, ein Kurvengetriebe vorzuschlagen, bei dem etwaige zwischen einem Kurvenglied, insbesondere einer Kurvenscheibe, und einem Eingriffsglied, insbesondere einem Linearschlitten, auftretenden Querkräfte möglichst gering gehalten werden.

Ein weiterer Aspekt ist es, ein Kurvengetriebe vorzuschlagen, mittels welchem die übertragbaren Kräfte gesteigert werden können, und/oder mittels welchem ferner die Lebensdauer des Kurvengetriebes, und insbesondere der im Linearschlitten angebrachten Abnahmevorrichtung, erhöht werden kann.

Diese Aufgabe und Aspekte werden durch das Kurvengetriebe mit den Merkmalen des Anspruchs 1 gelöst. In verfahrenstechnischer Hinsicht werden die Aufgabe und Aspekte durch das Herstellungsverfahren gemäß der Merkmale nach Anspruch 7 gelöst. Schließlich wird zur Lösung der Aufgabe und Aspekte ein Computerprogramm mit den Merkmalen nach Anspruch 12 vorgeschlagen, sowie eine Stanz-Biege-Maschine mit den Merkmalen nach Anspruch 15 angegeben.

Hierbei wird ein Kurvengetriebe vorgeschlagen, mit einem Kurvenglied und einem Eingriffsglied, wobei das Eingriffsglied eine drehbar gelagerte Abnahmerolle aufweist, zur Übertragung einer in das Kurvenglied eingeleiteten Antriebskraft auf das Eingriffsglied. Dabei weist das Eingriffsglied erstmalig wenigstens zwei drehbar gelagerte Abnahmerollen zur Übertragung der in das Kurvenglied eingeleiteten Antriebskraft auf das Eingriffsglied auf.

Indem das Eingriffsglied erstmals zwei drehbar gelagerte Abnahmerollen trägt, kann in vorteilhafter Weise die vom Kurvenglied beim bekannten Stand der Technik über die eine Abnahmerolle auf das Eingriffsglied ausgeübte Querkraft, die im ungünstigsten Fall bis zu 70% und teilweise noch mehr der vom Kurvenglied aufgeprägten Antriebskraft betragen kann, bis hin zu 0% der Antriebskraft reduziert bzw. eliminiert werden. Mit der vorliegenden Erfindung ist im günstigen Fall ein querkraftfreies Eingriffsglied erstmalig realisierbar, dessen Lebensdauer erheblich über bekannten Lebensdauererwartungen liegt. Hierbei lassen sich mit entsprechend aufgeprägten Antriebskräften erstmalig Wirkkräfte von bis zu 1000 kN und mehr vom Kurvenglied auf das Eingriffsglied übertragen. Zudem sind die aus der Praxis bekannten begrenzten Taktzeiten, die nicht mehr als steigerungsfähig galten, mit der Erfindung überraschend deutlich steigerbar.

Das Kurvenglied ist erfindungsgemäß als Kurvenscheibe ausgebildet. Ferner ist das Eingriffsglied als Linearschlitten ausgeführt.

Ein als Linearschlitten ausgebildetes Eingriffsglied bietet den Vorteil einer exakten Führung, die entsprechend reibungsarm und somit weitestgehend verlustfrei ausgestaltet werden kann, was letztlich einer exakten Vorausberechenbarkeit der auf das zu bearbeitende Werkstück aufbringbaren Wirkkraft zugute kommt.

Entsprechend einer weiteren Ausführungsform ist die Kurvenscheibe an der Gehäusestruktur drehbar gelagert.

Eine drehbare Lagerung der Kurvenscheibe gegenüber bzw. in der Gehäusestruktur bietet den Vorteil, daß damit ausreichend Bauraum für die Integration geeigneter Lager gegeben ist. Dies erlaubt eine bestmögliche Ausbildung der Lagerung als solcher, einschließlich entsprechender Freiräume in der Gestaltung der zu wählenden Lagertypen. Zudem sind damit die größtmöglichen Kräfte über eine entsprechend stabile Gehäusestruktur in den Boden beispielsweise einer Maschinenhalle ableitbar.

Einer weiteren Ausführungsform zufolge ist der Linearschlitten in einem beispielsweise als Gehäusestruktur ausgebildeten Steg oder dergleichen längs verschiebbar geführt.

Indem der Linearschlitten beispielsweise in einer Führungsnut, einer stegartig begrenzten Führungsstruktur oder einer Art Schlittenführung, die in der Gehäusestruktur ausgebildet ist, längs verschiebbar geführt wird, können die denkbar größten Wirkkräfte aufgeprägt und ohne nennenswerte Probleme beherrschbar abgeleitet werden. Damit lassen sich die gewünschten zufriedenstellenden hohen Standzeiten bei gleichzeitig hoher Taktzahl und hoher Wirkkraft erzielen. Zudem sind derart geführte Linearschlitten bekanntermaßen extrem wartungsarm und ausfallsicher.

Auch erfindungsgemäß weist der Linearschlitten einen schwenkbar gelagerten Pendelhebel auf, wobei der Pendelhebel des weiteren die wenigstens zwei Abnahmerollen trägt, die derart drehbar gelagert sind, daß die Kurvenscheibe zur Übertragung der eingeleiteten Antriebskraft auf den Linearschlitten auf den wenigstens zwei an die Kurvenscheibe anliegenden Abnahmerollen abwälzbar ist.

Ein schwenkbar gelagerter Pendelhebel, der am Linearschlitten schwenkbar gelagert angeordnet ist, vorzugsweise auf der der Kurvenscheibe zugewandten Seite des Linearschlittens, bietet den Vorteil, daß sich die vom Pendelhebel - an dessen der Kurvenscheibe zugewandten Ende - getragenen zwei Abnahmerollen optimal durch die Pendel- bzw. Schwenkbewegung des Pendelhebels an die Kontur der Kurvenscheibe anschmiegen können. Damit ist in vorteilhafter Weise gewährleistet, daß selbst bei hochkomplexen Kurvenscheibenkonturen die wenigstens zwei Abnahmerollen näherungsweise permanent an der Kurvenscheibenkontur anliegen können. Dies gewährleistet eine äußerst günstige Geometrie in Bezug auf die zu übertragenden Kräfte. Etwaige Querkräfte werden aufgrund der beiden Abnahmerollen in zwei einander entgegen gerichtete Teilkomponenten in Querrichtung zerlegt, so daß sich diese gegenseitig aufheben oder zumindest gegen Null reduzieren.

Der schwenkbar gelagerte Pendelhebel mit den beiden daran angeordneten Abnahmerollen bietet darüber hinaus den weiteren Vorteil, daß beliebige Kurvenscheibenprofile verwendet werden können, wie beispielsweise Scheibenkurven, Topfkurven, Nutkurven, Wulstkurven oder dergleichen.

Weiterhin ist von Vorteil, daß erstmalig eine Reduzierung der Querkraft gegen Null möglich ist. Damit läßt sich weiter vorteilhaft eine wesentliche Steigerung des Wirkungsgrades erzielen. Ferner verbessert sich die Eignung auch für Kurvenscheiben mit großen Hüben und kleineren Übergangswinkeln.

Einer weiteren Ausführungsform zufolge weist der Linearschlitten einen dem ersten Pendelhebel gegenüberliegenden zweiten Pendelhebel auf, wobei der zweite Pendelhebel seinerseits wenigstens zwei Abnahmerollen trägt, die derart drehbar gelagert sind, daß die Kurvenscheibe zur Übertragung der eingeleiteten Rückführungs- bzw. Rückholkraft auf den Linearschlitten auf den wenigstens zwei an die Kurvenscheibe anliegenden Abnahmerollen abwälzbar ist.

Ein zweiter Pendelhebel, der dem ersten Pendelhebel gegenüberliegend angeordnet ist, so daß dessen wenigstens zwei Abnahmerollen auf der gegenüberliegenden Seite längs der Kurvenscheibenkontur anliegen können, bietet den Vorteil, daß der Linearschlitten sozusagen zwischen den beiden Pendelhebeln zwangsgeführt werden kann. Auf diese Weise lassen sich nicht nur extrem hohe Wirkkräfte auf den Linearschlitten ausüben, sondern der Linearschlitten kann mit gleichermaßen hohen Rückholkräften wieder zurück nach oben bewegt werden, so daß eine optimal zwangsgeführte auf- und ab Bewegung des Linearschlittens selbst bei extrem hohen Taktfrequenzen und Kräften ausfallsicher zuverlässig gewährleistet ist.

Gemäß einer weiteren Ausführungsform ist der Pendelhebel symmetrisch und/oder "Y"-förmig ausgebildet.

Eine symmetrische Ausgestaltung des Pendelhebels bietet den Vorteil einer symmetrischen Geometrie der beiden Abnahmerollen in Relation zum Linearschlitten und zur Kurvenscheibe. Damit lassen sich sämtliche Kräfte, Momente und Geometrien optimal berechnen, da durch die symmetrische Ausgestaltung eine weitere bekannte Größe in das Gleichungssystem eingeführt wird. Doch auch eine gegebenenfalls unsymmetrische "Y"-för-mige Ausbildung des Pendelhebels bietet Vorteile, insbesondere dann, wenn die Kurvenscheibe ihrerseits eine asymmetrische komplexe Kontur aufweist. Dann kann ein "V"-förmig, "Y"-förmig oder "U"-förmig ausgebildeter Pendelhebel mit ungleich langen Schenkeln bzw. Armen, an denen die Abnahmerollen gelagert sind, vorteilhaft einen Ausgleich der komplexen Kontur der Kurvenscheibe bieten, so daß auf diese Weise wiederum etwaige Querkräfte ideal in zwei Querkraftkomponenten zerlegt werden können, die sich gegenseitig aufheben oder zumindest näherungsweise gegen Null reduzieren.

Nach einem weiteren Aspekt, hier nicht beansprucht, wird ein Kurvengetriebe, vorzugsweise ein dreigliedriges Kurvengetriebe für eine Stanz- und/oder Biegemaschine, mit einem Kurvenglied, einem Eingriffsglied und einem Steg, vorgeschlagen, wobei das Kurvenglied als Kurvenscheibe ausgebildet ist, das Eingriffsglied als Linearschlitten und der Steg z.B. als Gehäusestruktur. Die Kurvenscheibe ist an der Gehäusestruktur drehbar gelagert und der Linearschlitten in der Gehäusestruktur längs verschiebbar geführt. Der Linearschlitten weist einen schwenkbar gelagerten Pendelhebel auf, wobei der Pendelhebel erstmalig wenigstens zwei Abnahmerollen aufweist, die derart drehbar gelagert sind, daß die Kurvenscheibe zur Übertragung der eingeleiteten Antriebskraft auf den Linearschlitten auf den wenigstens zwei an die Kurvenscheibe anliegenden Abnahmerollen abwälzbar ist.

Mittels des Kurvengetriebes nach dem zweiten Aspekt lassen sich die vorstehend diskutierten Wirkungen und Vorteile in ungeschmälerter analoger Weise erzielen.

Darüber hinaus bietet das Kurvengetriebe nach dem zweiten Aspekt u.a. Vorteile für den Maschinenbetreiber, da damit besonders hohe Taktraten bei einem besonders geringen Verschleiß erzielt werden können. Dies schlägt sich in günstigen Betriebskosten nieder. Zudem zeichnet sich dieses Kurvengetriebe durch eine extrem große Laufruhe aus. Damit lassen sich größere Stückzahlen der herzustellenden Produkte in deutlich kürzer Zeit herstellen, als dies bislang der Fall war. Zudem sind pro Fertigungsvorgang geringere Maschinenlaufzeiten realisierbar, so daß schnellere Werkzeug- und oder Produktwechsel auch bei kleinen Serien vorteilhaft durchführbar sind.

Gemäß einer weiteren Ausführungsform weist der Linearschlitten auch bei der Ausführungsform nach einem zweiten Aspekt ferner einen dem ersten Pendelhebel gegenüberliegenden zweiten Pendelhebel auf, wobei der zweite Pendelhebel wenigstens zwei Abnahmerollen aufweist, die derart drehbar gelagert sind, daß die Kurvenscheibe zur Übertragung einer eingeleiteten Rückholkraft auf den Linearschlitten auf den wenigstens zwei an die Kurvenscheibe anliegenden Abnahmerollen abwälzbar ist.

Bei einer derartig symmetrisch ausgebildeten Zwangsführung ist in vorteilhafter Weise sichergestellt, daß die Abnahmerollen selbst bei komplexen Kurvenkonturen der Kurvenscheibe von der Kurvenkontur nicht abheben können, selbst wenn enorme Kräfte über 1000 kN hinaus übertragen werden sollen. Mit Blick auf die hohen Taktzeiten ist damit einem vorzeitigen Verschleiß aufgrund eines Ratterns oder Abhebens der Abnahmerollen wirkungsvoll begegnet. Die Standzeiten lassen sich deutlich verlängern.. Der Betrieb eines solchen Kurvengetriebes zeichnet sich durch vorstehend erwähnte hohe Laufruhe aus, die den Maschinenbetreibern zugute kommt.

Ferner ist der Pendelhebel symmetrisch und/oder "Y"-förmig ausgebildet. Damit lassen sich die selben positiven Wirkungen und Vorteile erzielen, wie bereits vorstehend diskutiert.

Nach einem weiteren Aspekt der vorliegenden Erfindung wird ferner ein Verfahren angegeben zum Herstellen eines Kurvengetriebes nach dem ersten Aspekt, vorzugsweise eines dreigliedrigen Kurvengetriebes für eine Stanz- und/oder Biegemaschine, mit einem Kurvenglied, einem Eingriffsglied und einem Steg, wobei das Kurvenglied als Kurvenscheibe, das Eingriffsglied als Linearschlitten und der Steg als Gehäusestruktur ausgebildet ist, wobei die Kurvenscheibe an der Gehäusestruktur drehbar gelagert und der Linearschlitten in der Gehäusestruktur längs verschiebbar geführt ist, und wobei der Linearschlitten eine drehbar gelagerte Abnahmerolle aufweist, zur Übertragung einer in die Kurvenscheibe eingeleiteten Antriebskraft auf den Linearschlitten. Das Verfahren ist dabei erstmals durch folgende Schritte geprägt:
- Festlegen des gewünschten Bewegungsprofils des Linearschlittens,
- Bestimmen der zu übertragenden Antriebs- und/oder Rückholkräfte,
- Festlegen der Abmessungen der Kurvenscheibe und/oder des Linearschlittens,
- Festlegen der Gestalt des ersten und/oder des zweiten Pendelhebels,
- Festlegen der Abmessungen der wenigstens zwei Abnahmerollen,
- Eingeben der Daten in einen Computer,
- Laden einer Berechungssoftware,
- Berechnung der optimalen Kontur der Kurvenscheibe für eine Erzielung des gewünschten Bewegungsprofils des Linearschlittens.

In einer vorteilhaften Ausführungsform des Verfahrens erfolgt der Verfahrensschritt des Festlegens eines gewünschten Bewegungsprofils des Linearschlittens und/oder der Kurvenscheibe unter Berücksichtigung der bekannten Bewegungsgesetzte, insbesondere unter Berücksichtigung der in der unter dem Titel "Bewegungsgesetze für Kurvengetriebe; Praktische Anwendung" veröffentlichten VDI-Richtlinie VDI 2143 definierten Bewegungsgesetze.

Ein weiterer Verfahrensschritt ist die Ermittlung der relevanten physikalischen Größen, wie beispielsweise die Geschwindigkeit, die Beschleunigung, die Ruckfunktion, der Momentenverlauf, oder dergleichen.

Mittels des Kurvengetriebes nach dem zweiten Aspekt lassen sich die vorstehend diskutierten positiven Wirkungen und Vorteile in ungeschmälerter analoger Weise erzielen.

Mit dem vorstehend diskutierten Herstellungsverfahren läßt sich das erfindungsgemäße Kurvengetriebe in den diskutierten Ausführungsformen und -varianten besonders kostengünstig herstellen. Zudem lassen sich alle denkbaren Varianten von Geometrien und Kräften vollständig im Voraus kalkulieren und dementsprechend die erforderlichen Bauteile korrekt dimensionieren. Dies führt wiederum zu einer verbesserten Laufruhe und damit letztlich auch zu einer optimierten Standzeit, einem reduzierten Verschleiß und letztlich einer enormen Kosteneinsparung beim Maschinenbetreiber.

Nach einem weiteren Aspekt der vorliegenden Erfindung wird ferner ein Computerprogramm zur Verfügung gestellt, mit Programmcode zur Durchführung wenigstens der Berechnung der optimalen Kontur der Kurvenscheibe nach dem ersten Aspekt, wenn das Programm in einem Computer ausgeführt wird.

Mit dem erfindungsgemäßen Computerprogramm können in vorteilhafter Weise kürzere Entwicklungszeiten für die Kurvenscheibe und mithin für das gesamte Werkzeug realisiert werden. Damit einher geht ein geringeres Entwicklungsrisiko. Für den Konstrukteur bietet dies darüber hinaus den Vorteil einer verbesserten Bindung des Kunden bzw. eines Maschinenbetreibers durch den mit dem Computerprogramm anbietbaren verbesserten Service. Darüber hinaus kann mittels dem Computerprogramm eine Optimierung dahingehend durchgeführt werden, daß für einen ganz bestimmten Bewegungsablauf des Linearschlittens bzw. für ein speziell gewünschtes Bewegungsprofil des Eingriffsgliedes nebst zugehörigem Lastverlauf eine optimierte Kontur des Kurvengliedes bzw. der Kurvenscheibe unter Berücksichtigung einer optimierten Ausführungsform des Pendelhebels mit zwei Abnahmerollen realisiert wird. Hierbei kann letztlich bereits am Computer der vollständige Bewegungsablauf simuliert, die dabei auftretenden Wirk- und Querkräfte dargestellt, und auf diese Weise störende Querkräfte weitestgehend gegen Null reduziert werden. Hierfür können mit dem Computerprogramm unterschiedliche Ausführungsformen des Pendelhebels, sei es eine symmetrische, eine " "V"-, "U" oder Y"-förmige oder eine andere Ausgestaltung durchgespielt werden, sodaß dann in Abhängigkeit von der Geometrie und der Anordnung der beiden Abnahmerollen relativ zum Lagerpunkt im Linearschlitten als auch zur abwälzenden Kontur der Kurvenscheibe eine optimale Positionierung der beiden Abnahmerollen mit Blick auf eine höchstmögliche Reduzierung der Querkräfte erreicht werden kann.

Entsprechend einer weiteren Ausführungsform der Erfindung ist der Programmcode auf einem maschinenlesbaren Träger gespeichert, wobei der Programmcode ferner in den Speicher eines Computers ladbar und/oder auf dem Computer und/oder auf einem CNC-gesteuerten Bearbeitungszentrum ausführbar ist.

Ferner wird, nach einem weiteren Aspekt der vorliegenden Erfindung, eine Stanz-Biege-Maschine vorgeschlagen, mit einem bodengestützten Gestell, einem darin vertikal längs verschiebbar geführten Pressenbären mit zugehörigem, ebenfalls im Gestell vertikal längs verschiebbar geführtem Ziehkissen, und zumindest einer Abtriebswelle, die von einem Motor, der beliebig an dem einen oder anderen Ende der jeweiligen Antriebswelle anflanschbar ist, antreibbar ist. Die Stanz-Biege-Maschine weist dabei ferner ein Kurvengetriebe mit wenigstens zwei an einem Pendelhebel drehbar gelagerten Abnahmerollen und mit den weiteren vorstehend beschriebenen Merkmalen nach dem ersten Aspekt auf, wobei das Kurvengetriebe vermittels des Motors über die Antriebswelle antreibbar ist.

Mittels einer solchen Stanz-Biege-Maschine lassen sich wiederum die vorstehend diskutierten positiven Wirkungen und Vorteile in ungeschmälerter analoger weise erzielen.

Mit dem vorstehend diskutierten erfindungsgemäßen Ausführungsformen von Kurvengetrieben mit einem wenigstens zwei Abnahmerollen tragenden Pendelhebel können in vorteilhafter Weise gleichförmige Drehbewegungen in eine intermittierende Abtriebsbewegung umgeformt werden. Dabei sind hohe Schalthäufigkeiten mit bis zu 1000 Takten pro Minute und mehr möglich. Es ist in vorteilhafter Weise ein sanftes Anfahren und Abbremsen durch zwangsgesteuerte Bewegungsabläufe der Kurvenscheibe realisierbar. Es ist ferner eine formschlüssige Positionierung der Baugruppen gewährleistet, so daß keine zusätzlichen Positioniereinheiten erforderlich werden. In vorteilhafter Weise ist eine konstante Bewegungsdauer realisiert, es treten keinerlei Überschneidungen von Bewegungsvorgängen oder gar Zeitverluste auf. Die vorstehend diskutierten erfindungsgemäßen Kurvengetriebe zeichnen sich durch eine sehr hohe Zuverlässigkeit aus und werden erwartungsgemäß über eine Vielzahl von Jahren ohne jegliche Störungen betrieben werden können. Die diskutierten Kurvengetriebe arbeiten dabei in vorteilhafter Weise in beide Drehrichtungen. Durch den spielfreien Aufbau verschiedener Ausführungsformen wird eine sehr hohe Genauigkeit erzielt. Derlei präzise Kurvengetriebe können in Bereichen eingesetzt werden, in denen exakte, gleiche Schrittbewegungen erforderlich sind, wie beispielsweise bei Verpackungsmaschinen, Montageautomaten, Pressenautomaten, Stanz- und Biegemaschinen, Handhabungsgeräten und dergleichen.

Weitere Merkmale, Aspekte und Vorteile der Erfindung werden anhand der nachfolgenden detaillierten Beschreibung bevorzugter Ausführungsformen unter Bezugnahme auf die beigefügten Zeichnungen deutlicher ersichtlich.

Dabei zeigt:
- Fig. 1: eine schematisch vereinfachte Darstellung eines herkömmlichen Kurvengetriebes mit einer Kurvenscheibe, einem Linearschlitten und einer einzigen daran gelagerten Abnahmerolle;
- Fig. 2: eine perspektivische Darstellung des in Fig. 1 gezeigten herkömmlich verwendeten Kurvengetriebes;
- Fig. 3: eine schematisch vereinfachte Darstellung eines erfindungsgemäßen Kurvengetriebes nach einer ersten Ausführungsform;
- Fig. 4: eine perspektivische Darstellung eines erfindungsgemäßen Kurvengetriebes nach einer weiteren Ausführungsform; und
- Fig. 5: eine weitere perspektivische Darstellung eines erfindungsgemäßen Kurvengetriebes nach einer weiteren Ausführungsform.

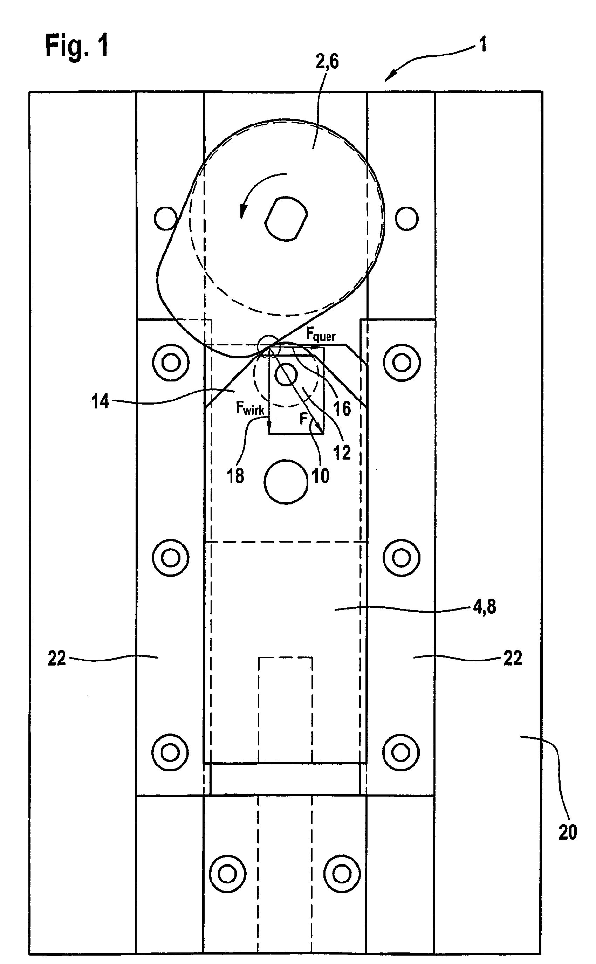

In Figur 1 ist eine schematisch vereinfachte Darstellung eines herkömmlichen Kurvengetriebes 1 mit einem Kurvenglied 2 und einem Eingriffsglied 4 dargestellt. Das Kurvenglied ist in der hier dargestellten Ausführungsform als gegen den Uhrzeigersinn rotierende Kurvenscheibe 6 ausgebildet. Das Eingriffsglied 4 wiederum ist in der dargestellten Ausführungsform als Linearschlitten 8 ausgebildet. Eine vom Kurvenglied 2 aufgeprägte Antriebskraft 10, die mit dem Pfeil F symbolisiert ist, wird bei der Übertragung auf eine Abnahmerolle 12, die in einem dem Kurvenglied zugewandten Endabschnitt 14 des Eingriffsgliedes 4 bzw. des Linearschlittens 8 drehbar gelagert ist, in eine Querkraft 16, die mit dem Pfeil F_{quer} dargestellt ist, und in eine Wirkkraft 18, die mit dem Pfeil F_{wirk} dargestellt ist, zerlegt.

Die dabei auftretenden Querkräfte können bis zu 70% und mehr der eingeprägten Antriebskraft 10 betragen, sodaß die Abnahmerolle 12, das Kurvenglied 2 und das Eingriffsglied 4 einem enormen Verschleiß unterliegen.

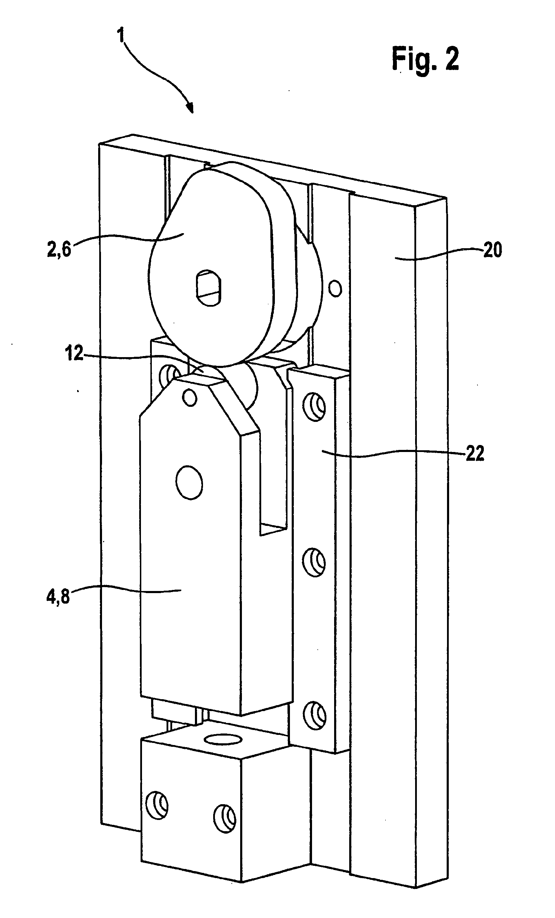

Das in Figur 1 schematisch vereinfacht dargestellte herkömmliche Kurvengetriebe 1 ist in Figur 2 in einer perspektivischen Darstellung weiter erläutert. Das als Kurvenscheibe 6 ausgebildete Kurvenglied 2 ist an der Gehäusestruktur 20 drehbar gelagert. Der Linearschlitten 8 wiederum ist in einer quasi als Gehäusestruktur ausgebildeten Führung, die einen Steg 22 ähnelt, längsverschiebbar geführt.

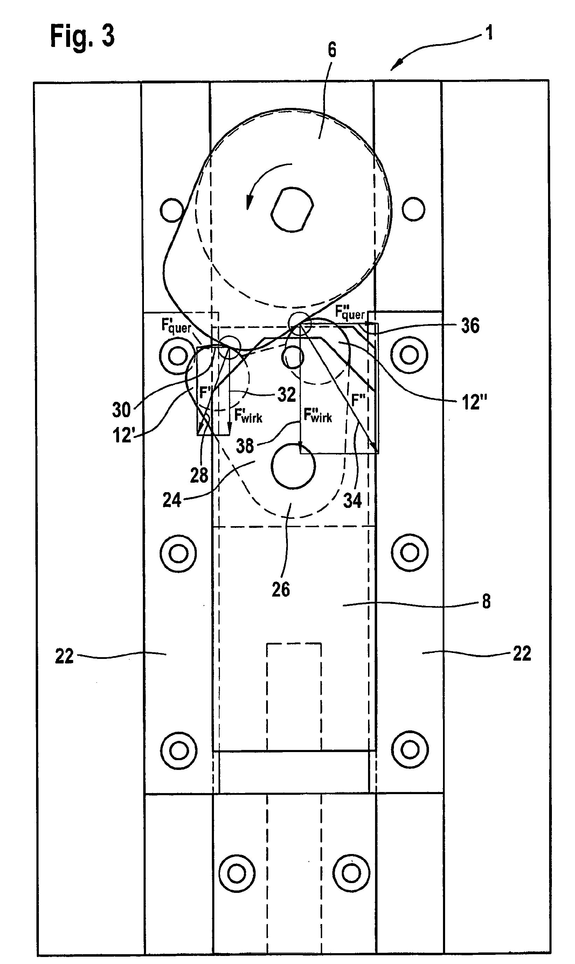

Entgegen dem in Figuren 1 und 2 dargestellten, aus der Praxis bekannten Kurvengetriebe ist in Figur 3 ein erfindungsgemäßes Kurvengetriebe schematisch vereinfacht dargestellt. Das erfindungsgemäße Kurvengetriebe 1 weist entgegen den aus dem Stand der Technik bekannten Kurvengetrieben wenigstens zwei Abnahmerollen 12' und 12 " auf. Die beiden Abnahmerollen 12' bzw. 12" sind von einem Pendelhebel 24 getragen, an welchem diese drehbar gelagert sind, wobei der Pendelhebel 24 seinerseits mit einem dem Linearschlitten 8 zugewandten Endabschnitt 26 drehbar in dem der Kurvenscheibe 6 zugewandten Endabschnitt 14 des Linearschlittens 8 gelagert ist.

Über die beiden Abnahmerollen 12' bzw. 12" kann die von der Kurvenscheibe 6 aufgeprägte Antriebskraft 10, die wiederum mit dem Pfeil F symbolisiert ist, in zwei Antriebskraftkomponenten zerlegt werden, die jeweils auf die Abnahmerolle 12' und auf die Abnahmerolle 12" einwirken. Dabei kann die erste Antriebskraftkomponente 28 (Pfeil F') mit der Abnahmerolle 12' in eine erste Querkraftkomponente 30 (Pfeil F_{quer}') und eine erste Wirkkraftkomponente 32 (Pfeil F_{wirk}') zerlegt werden. Mittels der Abnahmerolle 12" kann die zweite Antriebskraftkomponente 34 in eine zweite Querkraftkomponente 36 (Pfeil F_{quer}") und eine zweite Wirkkraftkomponente 38 (Pfeil F_{wirk}") zerlegt werden. Die beiden Wirkkraftkomponenten 32 und 38 addieren sich zur letztendlichen auf den Linearschlitten 8 einwirkenden Gesamtwirkkraft. Die beiden Querkraftkomponenten 30 und 36 kompensieren sich gegenseitig und führen dazu, das Querkräfte gegen Null reduziert werden können.

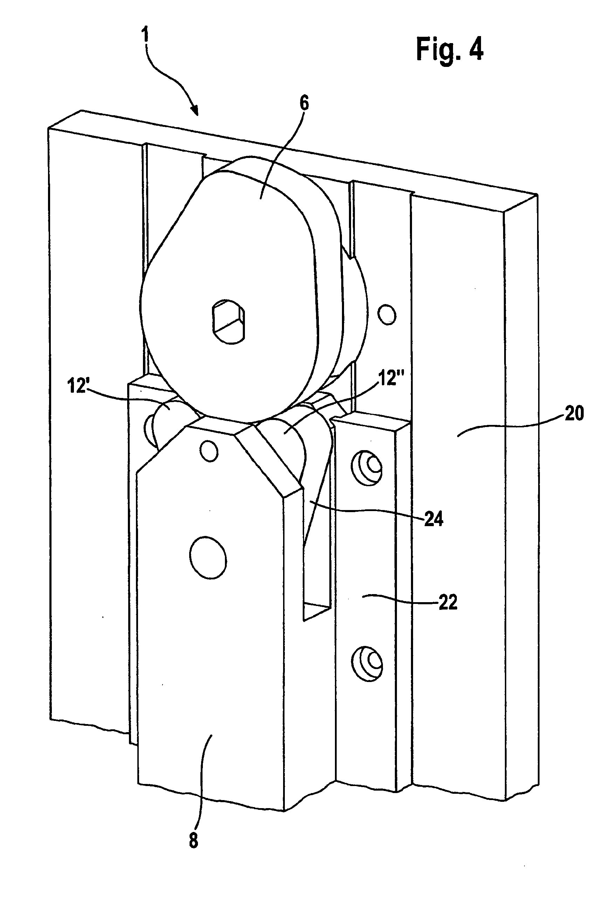

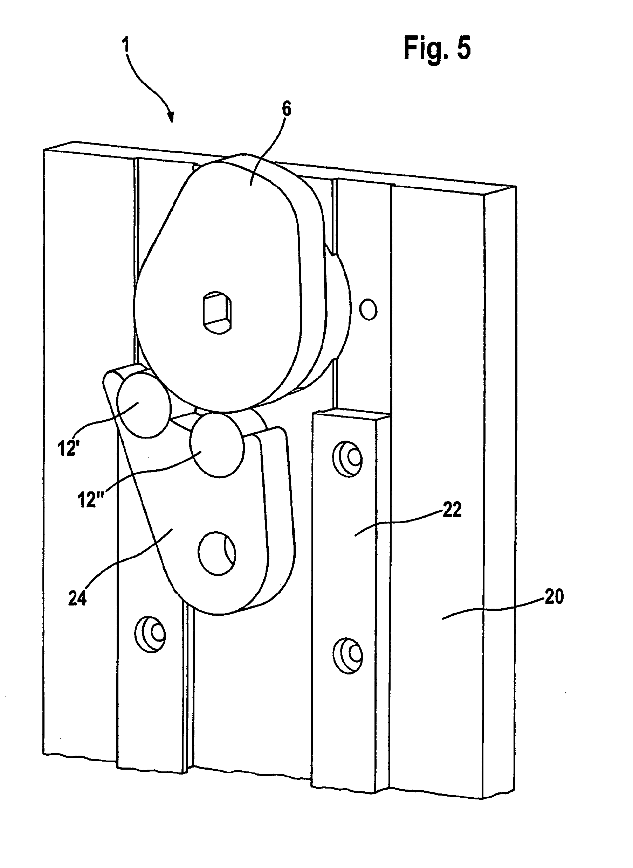

Wie dies weiterhin aus Figur 4 in einer perspektivischen Darstellung einer weiteren Ausführungsform des erfindungsgemäßen Kurvengetriebes 1 und in Figur 5 mit einer weiteren perspektivischen Darstellung einer weiteren Ausführungsform des erfindungsgemäßen Kurvengetriebes 1 ersichtlich ist, kann der Pendelhebel 24 beispielsweise, wie in Figur 4 dargestellt, symmetrisch ausgebildet sein. Dabei kann der Pendelhebel "V"-förmig oder "Y"-formig ausgebildet sein. Die in Figur 5 dargestellte Ausführungsform des Pendelhebels 24 zeigt diesen in einer asymmetrischen "U"-förmigen Ausgestaltung mit ungleich langen Schenkeln, so daß die Abnahmerollen 12' bzw. 12" in Bezug auf die Mittellängsachse des Kurvengetriebes 1 nicht symmetrisch an der Kurvenscheibe 6 anliegen. Dahingegen ist in Figur 4 ein längs der Mittelachse des Kurvengetriebes ein symmetrischer Aufbau gezeigt, mit einem symmetrischen "Y"-förmig durchgebildeten Pendelhebel 24, so daß die beiden Abnahmerollen 12' bzw. 12" symmetrisch an der Kurvenscheibe 6 anliegen. Insbesondere wenn die Kurvenscheibe 6 ihrerseits symmetrisch ausgebildet ist, ergibt sich hieraus eine relativ einfach durchzurechnende Ausführungsform des erfindungsgemäßen Kurvengetriebes, welches sich durch einen besonders exakten Lauf auszeichnet.

Mit der vorliegenden Erfindung wird damit erstmals ein Kurvengetriebe diskutiert, mit einem Kurvenglied und einem Eingriffsglied, wobei das Eingriffsglied eine drehbar gelagerte Abnahmerolle aufweist, zur Übertragung einer in das Kurvenglied eingeleiteten Antriebskraft auf das Eingriffsglied, wobei das. Eingriffsglied erstmals wenigstens zwei drehbar gelagerte Abnahmerollen aufweist. Ferner schlägt die vorliegende Erfindung ein Herstellungsverfahren hierfür vor, gibt ein Programm zur Durchführung wenigstens einiger der Schritte des Herstellungsverfahrens an und diskutiert eine mit einem solchen Kurvengetriebe ausgestattete Stanz-Biege-Maschine.

## Patentansprüche

1. Kurvengetriebe (1) für eine Stanz- und/oder Biegemaschine, mit einem Kurvenglied (2) und einem Eingriffsglied (4), wobei das Eingriffsglied (4) eine drehbar gelagerte Abnahmerolle (12') aufweist, zur Übertragung einer in das Kurvenglied (2) eingeleiteten Antriebskraft (10) auf das Eingriffsglied (4),
wobei das Eingriffsglied (4) wenigstens zwei drehbar gelagerte Abnahmerollen (12'; 12") aufweist;
wobei das Kurvenglied als Kurvenscheibe (6) ausgebildet ist;
wobei das Eingriffsglied als Linearschlitten (8) ausgebildet ist;
**dadurch gekennzeichnet, daß**
der Linearschlitten (8) einen schwenkbar gelagerten Pendelhebel (24) aufweist, wobei der Pendelhebel (24) die wenigstens zwei Abnahmerollen (12'; 12") trägt, die derart drehbar gelagert sind, daß die Kurvenscheibe (6) zur Übertragung der eingeleiteten Antriebskraft (28; 34) auf den Linearschlitten (8) auf den wenigstens zwei an die Kurvenscheibe (6) anliegenden Abnahmerollen (12'; 12") abwälzbar ist, unter Erzeugung einer aus zwei Wirkkraftkomponenten (32; 38) bestehenden Gesamtwirkungskraft; und
wobei die vom Kurvenglied (2) auf die Abnahmerollen (12', 12") aufgeprägten Querkräfte aufgrund der beiden Abnahmerollen (12'; 12") in zwei einander entgegengerichtete Teilkomponenten in Querrichtung zerlegt werden, sodass sich diese gegenseitig aufheben oder zumindest gegen Null reduzieren.

2. Kurvengetriebe nach Anspruch 1, **dadurch gekennzeichnet, daß** die Kurvenscheibe (6) an der Gehäusestruktur (20) drehbar gelagert ist.

3. Kurvengetriebe nach Anspruch 1 oder 2, **dadurch gekennzeichnet, daß** der Linearschlitten (8) in einem als Gehäusestruktur ausgebildeten Steg (22) längs verschiebbar geführt ist.

4. Kurvengetriebe nach einem der Ansprüche 1 bis 3, **dadurch gekennzeichnet, daß** der Linearschlitten (8) einen dem Pendelhebel (24) gegenüberliegenden zweiten Pendelhebel aufweist, wobei der zweite Pendelhebel wenigstens zwei Abnahmerollen trägt, die derart drehbar gelagert sind, daß die Kurvenscheibe (6) zur Übertragung der eingeleiteten Rückführungskraft auf den Linearschlitten (8) auf den wenigstens zwei an die Kurvenscheibe (6) anliegenden Abnahmerollen abwälzbar ist.

5. Kurvengetriebe nach einem der Ansprüche 1 bis 4, **dadurch gekennzeichnet, daß** der Pendelhebel (24) symmetrisch ausgebildet ist.

6. Kurvengetriebe nach einem der Ansprüche 1 bis 5, **dadurch gekennzeichnet, daß** der Pendelhebel (24) "Y"-förmig ausgebildet ist.

7. Verfahren zum Herstellen eines Kurvengetriebes nach einem der Ansprüche 1 bis 6, vorzugsweise eines dreigliedrigen Kurvengetriebes, für eine Stanz- und/oder Biegemaschine, mit einem Kurvenglied, einem Eingriffsglied und einem Steg,
wobei das Kurvenglied als Kurvenscheibe, das Eingriffsglied als Linearschlitten und der Steg als Gehäusestruktur ausgebildet ist,
wobei die Kurvenscheibe an der Gehäusestruktur drehbar gelagert und der Linearschlitten in der Gehäusestruktur längs verschiebbar geführt ist, und wobei der Linearschlitten wenigstens zwei drehbar gelagerte Abnahmerollen aufweist, zur Übertragung einer in die Kurvenscheibe eingeleiteten Antriebskraft auf den Linearschlitten,
**gekennzeichnet durch** die Schritte:
- Festlegen des gewünschten Bewegungsprofils des Linearschlittens,
- Bestimmen der zu übertragenden Antriebs- und/oder Rückholkräfte,
- Festlegen der Abmessungen der Kurvenscheibe und/oder des Linearschlittens,
- Festlegen der Gestalt des ersten und/oder des zweiten Pendelhebels,
- Festlegen der Abmessungen der wenigstens zwei Abnahmerollen,
- Eingeben der Daten in einen Computer,
- Laden einer Berechungssoftware,
- Berechnung der optimalen Kontur der Kurvenscheibe für eine Erzielung des gewünschten Bewegungsprofils des Linearschlittens.

8. Verfahren nach Anspruch 7, ferner mit dem Schritt:
- Ermittlung von physikalischen Größen, vorzugsweise von Geschwindigkeit, Beschleunigung, Ruckfunktion oder Momentenverlauf.

9. Verfahren nach Anspruch 7 oder 8, ferner mit dem Schritt:
- Übertragen der berechneten Daten in ein CNC-gesteuertes Mehrachsen-Fertigungszentrum.

10. Verfahren nach einem der Ansprüche 7 bis 9, ferner mit dem Schritt:
- Herstellen der komplexen Kontur der Kurvenscheibe auf dem CNC-gesteuerten Mehrachsen-Fertigungszentrum.

11. Verfahren nach einem der Ansprüche 7 bis 10, ferner mit dem Schritt:
- Montage des Kurvengetriebes.

12. Maschinenlesbares Computerprogramm mit Programmcode zur Durchführung der Schritten des Verfahrens nach wenigstens einem der Ansprüche 7 bis 11, wenn das Programm in einem Computer ausgeführt wird.

13. Computerprogramm nach Anspruch 12, wobei der Programmcode auf einem maschinenlesbaren Träger gespeichert ist.

14. Computerprogramm nach Anspruch 12 oder 13, wobei der Programmcode in den Speicher eines Computers ladbar und/oder auf dem Computer ausführbar ist.

15. Stanz-Biege-Maschine mit einem bodengestützten Gestell, einem darin vertikal längs verschiebbar geführten Pressenbär mit zugehörigem, ebenfalls im Gestell vertikal längs verschiebbar geführtem Ziehkissen, zumindest einer Abtriebswelle, die von einem Motor, der beliebig an dem einen oder anderen Ende der jeweiligen Antriebswelle anflanschbar ist, antreibbar ist,
**gekennzeichnet durch**
ein Kurvengetriebe (1) mit den Merkmalen nach wenigstens einem der Ansprüche 1 bis 6, wobei das Kurvengetriebe vermittels des Motors über die Antriebswelle antreibbar ist, zur Durchführung einer Stanz- und/oder Biegebewegung.

## Claims

1. Cam mechanism (1) for a punching and/or bending machine having a cam element (2) and an engaging element (4), wherein said engaging element (4) has a rotatably mounted transfer roller (12') for transmitting a driving force (10) input into said cam element (2) onto the engaging element (4),
wherein said engaging element (4) has at least two rotatably mounted transfer rollers (12'; 12");
wherein said cam element is designed as a cam disc (6);
wherein said engaging element is designed as a linear carriage (8); **characterised in that**
said linear carriage (8) has a pivotably mounted pendulum lever (24), wherein said pendulum lever (24) carries the at least two transfer rollers (12'; 12") that are rotatably mounted in such a manner that the cam disc (6) for transmitting the input driving force (28; 34) onto the linear carriage (8) can be rolled on the at least two transfer rollers (12'; 12") abutting onto the cam disc (6), by generating a total effective force made up of two force components (32; 38) and
wherein the lateral forces from the cam element (2) impressed onto the transfer rollers (12'; 12") cancel each other out or are at least reduced to almost zero because both transfer rollers (12'; 12") are separated in the lateral direction into two opposing partial components.

2. Cam mechanism according to claim 1, **characterised in that** the cam disc (6) is rotatably mounted on the housing structure (20).

3. Cam mechanism according to claim 1 or 2, **characterised in that** the linear carriage (8) is guided in a longitudinally movable manner in a web (22) constructed as the housing structure.

4. Cam mechanism according to one of claims 1 to 3, **characterised in that** the linear carriage (8) has a second pendulum lever opposite to the pendulum lever (24), wherein the second pendulum lever carries at least two transfer rollers that are rotatably mounted in such a manner that the cam disc (6) for transmitting the input driving force onto the linear carriage (8) can be rolled on the at least two transfer rollers abutting onto the cam disc (6).

5. Cam mechanism according to one of claims 1 to 4, **characterised in that** the pendulum lever (24) has a symmetrical design.

6. Cam mechanism according to one of claims 1 to 5, **characterised in that** the pendulum lever (24) has a "Y"-shaped design.

7. Method for making a cam mechanism according to one of claims 1 to 6, preferably a tripartite cam mechanism for a punching and/or bending machine, with a cam element, an engaging element and a web,
wherein the cam element is designed as the cam disc, the engaging element is designed as the linear carriage and the web is designed as the housing structure,
wherein the cam disc is rotatably mounted and the linear carriage is guided in a longitudinally movable manner in the housing structure, and wherein the linear carriage has at least two rotatably mounted transfer rollers, for transmitting a driving force input into the cam disc onto the linear carriage,
**characterised by** the steps:
- defining the desired movement profile of the linear carriage,
- determining the driving forces and/or restoring forces to be transferred,
- defining the dimensions of the cam disc and/or of the linear carriage,
- defining the shape of the first and/or second pendulum lever,
- defining the dimensions of the at least two transfer rollers,
- entering the data into a computer,
- loading a calculation software,
- calculating the optimal contour of the cam disc in order to achieve the desired movement profile of the linear carriage.

8. Method according to claim 7 with the additional step:
- determining physical values, preferably velocity, acceleration, jerk function or torque path.

9. Method according to claim 7 or 8 with the additional step:
- transferring the calculated data into a CNC-controlled multi-axis production centre.

10. Method according to one of claims 7 to 9 with the additional step:
- producing the complex contour of the cam disc on the CNC-controlled multi-axis production centre.

11. Method according to one of claims 7 to 10 with the additional step:
- assembling the cam mechanism.

12. Machine-readable computer programme with programme code for carrying out the steps of the method according to at least one of claims 7 to 11, if the programme is run in a computer.

13. Computer programme according to claim 12, wherein the programme code is stored on a machine-readable medium.

14. Computer programme according to claim 12 or 13, wherein the programme is loadable into the memory of a computer and/or is executable on the computer.

15. Punching-bending machine having a floor-based frame, in which a press-bear is vertically guided in a longitudinally movable manner with an associated die cushion that is likewise vertically guided in the frame in a longitudinally movable manner, at least one pinion shaft that is drivable by a motor that is flange-mountable as desired on either of the ends of the respective drive shaft,
**characterised by**
a cam mechanism (1) with the features according to at least one of claims 1 to 6, wherein the cam mechanism is drivable by means of the motor through the drive shaft, for the purpose of carrying out a punching and/or bending movement.

## Revendications

1. Commande à came (1) pour une machine à poinçonner et/ou à cintrer, avec un élément à came (2) et un élément d'engrènement (4), ledit élément d'engrènement (4) présentant un galet de transfert (12') monté de manière rotative, pour la transmission à l'élément d'engrènement (4) d'une force d'entraînement (10) appliquée sur l'élément à came (2),
l'élément d'engrènement (4) présentant au moins deux galets de transfert (12' ; 12") montés de manière rotative ;
l'élément à came étant réalisé comme disque de came (6) ; l'élément d'engrènement étant réalisé comme chariot linéaire (8) ;
**caractérisée en ce que**
le chariot linéaire (8) présente un levier pendulaire (24) monté de manière pivotante, ledit levier pendulaire (24) supportant les au moins deux galets de transfert (12' ; 12"), lesquels sont montés de manière rotative de telle façon que le disque de came (6) pour la transmission au chariot linéaire (8) de la force d'entraînement (28 ; 34) appliquée puisse rouler sur les au moins deux galets de transfert (12' ; 12") adjacents au disque de came (6), en générant une force d'action globale constituée de deux composantes de force d'action (32 ; 38) ; et
**en ce que** les forces transversales appliquées par l'élément à came (2) sur les galets de transfert (12' ; 12") sont en raison des deux galets de transfert (12' ; 12") décomposées en deux composantes partielles de sens opposés dans la direction transversale, si bien qu'elles s'annulent réciproquement ou tendent au moins vers zéro.

2. Commande à came selon la revendication 1, **caractérisée en ce que** le disque de came (6) est monté de manière rotative contre la structure de boîtier (20).

3. Commande à came selon la revendication 1 ou 2, **caractérisée en ce que** le chariot linéaire (8) est guidé de manière à être déplaçable longitudinalement dans une traverse (22) réalisée comme structure de boîtier.

4. Commande à came selon l'une des revendications 1 à 3, **caractérisée en ce que** le chariot linéaire (8) présente un deuxième levier pendulaire opposé au premier levier pendulaire (24), ledit deuxième levier pendulaire supportant au moins deux galets de transfert, lesquels sont montés de manière rotative de telle façon que le disque de came (6) pour la transmission au chariot linéaire (8) de la force de rappel appliquée puisse rouler sur les au moins deux galets de transfert adjacents au disque de came (6).

5. Commande à came selon l'une des revendications 1 à 4, **caractérisée en ce que** le levier pendulaire (24) est réalisé de manière symétrique.

6. Commande à came selon l'une des revendications 1 à 5, **caractérisée en ce que** le levier pendulaire (24) est réalisé en forme de Y.

7. Procédé de fabrication d'une commande à came selon l'une des revendications 1 à 6, préférentiellement une commande à came à trois éléments pour une machine à poinçonner et/ou à cintrer, avec un élément à came, un élément d'engrènement et une traverse,
l'élément à came étant réalisé comme disque de came, l'élément d'engrènement comme chariot linéaire et la traverse comme structure de boîtier,
le disque de came étant monté de manière rotative contre la structure de boîtier et le chariot linéaire étant guidé de manière à être déplaçable longitudinalement dans la structure de boîtier, et
le chariot linéaire présentant un galet de transfert monté de manière rotative, pour la transmission au chariot linéaire d'une force d'entraînement appliquée sur le disque de came,
**caractérisé par** les étapes suivantes :
- définition du profil de mouvement souhaité pour le chariot linéaire,
- détermination des forces d'entraînement et/ou de rappel à transmettre,
- définition des dimensions du disque de came et/ou du chariot linéaire,
- définition de la forme du premier et/ou du deuxième levier pendulaire,
- définition des dimensions des au moins deux galets de transfert,
- saisie des données dans un ordinateur,
- chargement d'un programme de calcul,
- calcul du contour optimal du disque de came afin d'obtenir le profil de mouvement souhaité pour le chariot linéaire.

8. Procédé selon la revendication 7, comprenant en outre l'étape suivante :
- détermination de grandeurs physiques, préférentiellement vitesse, accélération, fonction de variation d'accélération ou variation de couple.

9. Procédé selon la revendication 7 ou la revendication 8, comprenant en outre l'étape suivante :
- transmission des données calculées à un centre de fabrication à plusieurs axes à commande CNC.

10. Procédé selon l'une des revendications 7 à 9, comprenant en outre l'étape suivante :
- production du contour complexe du disque de came sur le centre de fabrication à plusieurs axes à commande CNC.

11. Procédé selon l'une des revendications 7 à 10, comprenant en outre l'étape suivante :
- montage de la commande à came.

12. Programme informatique lisible machine avec un code programme pour l'exécution des étapes du procédé selon au moins une des revendications 7 à 11 quand le programme est exécuté sur un ordinateur.

13. Programme informatique selon la revendication 12, où le code programme est mémorisé sur un support lisible machine.

14. Programme informatique selon la revendication 12 ou 13, où le code programme est chargeable dans la mémoire d'un ordinateur et/ou est exécutable sur l'ordinateur.

15. Machine à poinçonner et à cintrer avec un bâti monté sur le sol, un coulisseau guidé à l'intérieur de celui-ci de manière à être mobile longitudinalement dans la direction verticale avec un coussin serre-flan guidé dans le bâti de manière à être mobile longitudinalement dans la direction verticale, au moins un arbre de transmission, lequel est entraînable par un moteur bridable indifféremment à l'une ou l'autre extrémité de l'arbre de transmission correspondant,
**caractérisée par**
une commande à came (1) présentant les caractéristiques selon au moins une des revendications 1 à 6, ladite commande à came étant entraînable au moyen du moteur par l'intermédiaire de l'arbre de transmission pour l'exécution d'un mouvement de poinçonnage et/ou de cintrage.
